# EUROPEAN PATENT APPLICATION

(11) **EP 4 545 170 A1**
(43) Date of publication of application: **30.04.2025**
(21) Application number: 23827301.5
(22) Date of filing: 23.06.2023
(51) Int. Cl.: B01D 61/00, B01D 61/36

(54) **MANUFACTURING METHOD AND PROGRAM, MANUFACTURING DEVICE, ASSISTANCE METHOD AND PROGRAM, AND ASSISTANCE DEVICE**

(30) Priority: 24.06.2022 JP 2022101499
(71) Applicant: Asahi Kasei Kabushiki Kaisha, Tokyo 1000006 (JP)
(72) Inventor: FUJITA, Mitsuru, Tokyo 100-0006 (JP); SUGA, Yuki, Tokyo 100-0006 (JP)
(74) Representative: D Young & Co LLP
(86) International application number: PCT/JP2023/023435
(87) International publication number: WO 2023/249119

(57) **Abstract**

[Solution] Provided is a manufacturing method for concentrating a predetermined feed solution with a concentrating apparatus and manufacturing a concentrated solution, wherein: the feed solution includes at least a solute, a first solvent and a second solvent; the concentrating apparatus has a concentrating module which concentrates the feed solution via a concentrating membrane; the manufacturing method comprises: inputting target concentrated solution information including a target composition of the concentrated solution; acquiring current concentrated solution information including a current composition of the concentrated solution; acquiring previous concentrated solution information including a previous composition of the concentrated solution; calculating, based on the current concentrated solution information and the previous concentrated solution information, a mass transfer coefficient of the concentrating membrane; calculating, based on the current concentrated solution information and the previous concentrated solution information, a driving force for the concentrated solution to pass through the concentrating membrane; and calculating, based on the driving force and the mass transfer coefficient, predicted concentrated solution information including composition of the concentrated solution after elapse of a certain period of time.

## Description

### BACKGROUND

### 1. TECHNICAL FIELD

The present invention relates to a manufacturing method and a program, a manufacturing apparatus, an assistance method and a program, and an assistance apparatus.

### 2. RELATED ART

In Patent Document 1, a forward osmosis (FO) method is described as a concentrating method of a raw material solution. In Patent Document 2, a membrane distillation (MD) method is described as a concentrating method of a raw material solution.

### Prior Art Document

### Patent Document

Patent Document 1: U.S. Patent Application Publication No. 2016/0016116
Patent Document 2: International Publication No. 2016/006670

### TECHNICAL PROBLEM

In such operations of a concentrating apparatus using a concentrating method, complicated and precise control is required.

### GENERAL DISCLOSURE

In a first aspect of the present invention, provided is a manufacturing method for concentrating a predetermined feed solution with a concentrating apparatus and manufacturing a concentrated solution, wherein: the feed solution includes at least a solute, a first solvent and a second solvent; the concentrating apparatus has a concentrating module which concentrates the feed solution via a concentrating membrane; the manufacturing method comprises: inputting target concentrated solution information including a target composition of the concentrated solution; acquiring current concentrated solution information including a current composition of the concentrated solution; acquiring previous concentrated solution information including a previous composition of the concentrated solution; calculating, based on the current concentrated solution information and the previous concentrated solution information, a mass transfer coefficient of the concentrating membrane; calculating, based on the current concentrated solution information and the previous concentrated solution information, a driving force for the concentrated solution to pass through the concentrating membrane; and calculating, based on the driving force and the mass transfer coefficient, predicted concentrated solution information including composition of the concentrated solution after elapse of a certain period of time.

In a second aspect of the present invention, provided is a program for causing a computer to perform the manufacturing method according to the first aspect of the present invention.

In a third aspect of the present invention, provided is a manufacturing apparatus which concentrates a predetermined feed solution with a concentrating apparatus and manufactures a concentrated solution, wherein: the feed solution at least includes a solute, a first solvent and a second solvent; the concentrating apparatus includes a concentrating module which concentrates the feed solution via a concentrating membrane; the manufacturing apparatus comprises: an input unit which inputs target concentrated solution information including target composition of the concentrated solution; an acquiring unit which acquires current concentrated solution information including current composition of the concentrated solution, and previous concentrated solution information including previous composition of the concentrated solution; a mass transfer coefficient calculation unit which calculates, based on the current concentrated solution information and the previous concentrated solution information, a mass transfer coefficient of the concentrating membrane; a driving force calculation unit which calculates, based on the current concentrated solution information and the previous concentrated solution information, a driving force for the concentrated solution to pass through the concentrating membrane; and a predicting unit which calculates, based on the driving force and the mass transfer coefficient, predicted concentrated solution information including composition of the concentrated solution after elapse of a certain period of time.

In a fourth aspect of the present invention, provided is an assistance method of a concentrating apparatus for producing a concentrated solution concentrated from a predetermined feed solution, wherein: the feed solution at least includes a solute, a first solvent and a second solvent; the concentrating apparatus includes a concentrating module which concentrates the feed solution via a concentrating membrane; the assistance method comprises: inputting target concentrated solution information including a target composition of the concentrated solution; acquiring current concentrated solution information including a current composition of the concentrated solution; acquiring previous concentrated solution information including a previous composition of the concentrated solution; calculating, based on the current concentrated solution information and the previous concentrated solution information, a mass transfer coefficient of the concentrating membrane; calculating, based on the current concentrated solution information and the previous concentrated solution information, a driving force for the concentrated solution to pass through the concentrating membrane; and calculating, based on the driving force and the mass transfer coefficient, predicted concentrated solution information including composition of the concentrated solution after elapse of a certain period of time.

In a fifth aspect of the present invention, provided is a program for causing a computer to perform the assistance method according to the fourth aspect of the present invention.

In a sixth aspect of the present invention, provided is an assistance apparatus of a concentrating apparatus for producing a concentrated solution concentrated from a predetermined feed solution, wherein: the feed solution at least includes a solute, a first solvent and a second solvent; the concentrating apparatus includes a concentrating module which concentrates the feed solution via a concentrating membrane; the assistance apparatus comprises: an input unit which inputs target concentrated solution information including target composition of the concentrated solution; an acquiring unit which acquires current concentrated solution information including current composition of the concentrated solution, and previous concentrated solution information including previous composition of the concentrated solution; a mass transfer coefficient calculation unit which calculates, based on the current concentrated solution information and the previous concentrated solution information, a mass transfer coefficient of the concentrating membrane; a driving force calculation unit which calculates, based on the current concentrated solution information and the previous concentrated solution information, a driving force for the concentrated solution to pass through the concentrating membrane; and a predicting unit which calculates, based on the driving force and the mass transfer coefficient, predicted concentrated solution information including composition of the concentrated solution after elapse of a certain period of time.

The summary clause does not necessarily describe all necessary features of the embodiments of the present invention. The present invention may also be a sub-combination of the features described above.

### BRIEF DESCRIPTION OF THE DRAWINGS

Fig.1 illustrates an example of a configuration of a concentrating apparatus 200.
Fig. 2 illustrates an example of a configuration of an assistance apparatus 100 according to Example 1.
Fig. 3 is a block diagram showing an example of an assistance method of the assistance apparatus 100.
Fig. 4 illustrates an example of display on an input unit 10.
Fig. 5 illustrates an example of display on a display unit 30.
Fig. 6 illustrates another example of display on the display unit 30.
Fig. 7 illustrates an example of a configuration of a manufacturing apparatus 1000 according to Example 2.
Fig. 8 is a block diagram showing an example of a manufacturing method of the manufacturing apparatus 1000.
Fig. 9 illustrates an example of a configuration of an assistance apparatus 3100 according to Example 3.
Fig. 10 is a block diagram showing an example of an assistance method of the assistance apparatus 3 100.
Fig. 11 illustrates an example of composition information 3032 shown on a display unit 3030.
Fig. 12 illustrates another example of composition information 3032 shown on the display unit 3030.
FIG. 13 illustrates an example of a computer 2200 in which a plurality of aspects of the present invention may be entirely or partially embodied.

### DESCRIPTION OF EXEMPLARY EMBODIMENTS

Hereinafter, the invention will be described through embodiments of the invention, but the following embodiments do not limit the invention according to claims. In addition, not all of the combinations of features described in the embodiments are imperative to the solving means of the invention.

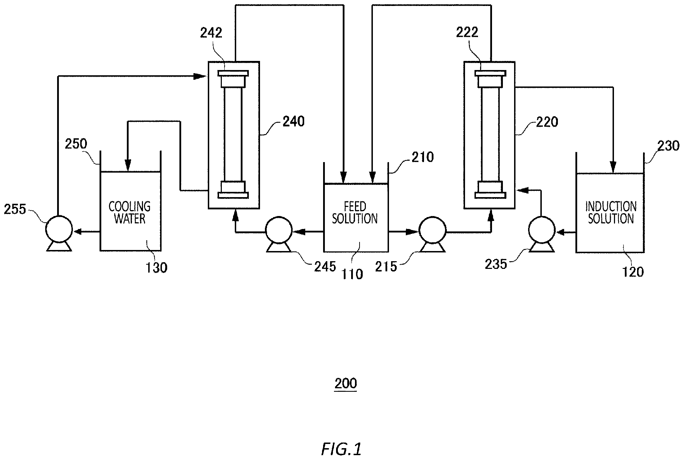

Fig.1 illustrates an example of a configuration of a concentrating apparatus 200. The concentrating apparatus 200 in the present example is an example of a concentrating apparatus for producing a concentrated solution concentrated from a predetermined feed solution. The concentrated solution produced by the concentrating apparatus 200 is commercialized as a food, a pharmaceutical product or the like through a subsequent lyophilization process. The concentrating apparatus 200 includes a feed solution tank 210, a feed solution pump 215, a first concentrating module 220, a draw solution tank 230 and a draw solution pump 235.

The feed solution tank 210 stores a feed solution 110 supplied to the concentrating apparatus 200. The feed solution 110 in the present example includes a peptide as a solute, and at least includes water and an organic solvent as a solvent. The organic solvent may be at least any of acetonitrile, isopropanol, acetone, methanol, or ethanol. The feed solution 110 in the present example includes acetonitrile as an organic solvent. The feed solution 110 in the present example may further include acetic acid as the solvent.

A peptide is widely used as a diagnostic drug, a test drug, a pharmaceutical product, or the like, and its raw material is very expensive. Therefore, when concentrating the feed solution 110 including peptide, it is crucial to collect the peptide in high yield without denaturing it.

Acetonitrile is an organic solvent that retains dissolved peptides. As a concentration of acetonitrile decreases through the concentration of the feed solution 110, the peptide precipitates. Meanwhile, as water is separated from the feed solution 110 through concentration, the concentration of the acetonitrile increases, and the lyophilization process subsequently takes a longer time. Therefore, management of the concentration of acetonitrile is crucial during the production of the concentrated solution.

The feed solution tank 210 feeds the feed solution 110 to the first concentrating module 220 by the feed solution pump 215. A pumping capacity of the feed solution pump 215 affects a flow rate, namely the linear velocity, of the feed solution 110 in the first concentrating module 220. The feed solution tank 210 may include a sensor that acquires information such as the temperature and the storage amount of the feed solution 110 in the first concentrating module 220.

The first concentrating module 220 includes one or more first concentrating membranes 222. The draw solution tank 230 stores the draw solution 120. The draw solution tank 230 feeds the draw solution 120 to the first concentrating module 220 by the draw solution pump 235. The pumping capacity of the draw solution pump 235 affects the flow rate, namely linear velocity, of the draw solution 120 in the first concentrating module 220. The draw solution tank 230 may include a sensor that acquires information such as the temperature and the storage amount of the draw solution 120.

The first concentrating module 220 in the present example concentrates the feed solution 110 by a forward osmosis (FO) method. The first concentrating membrane 222 is a forward osmosis membrane (FO membrane) in the shape of hollow fiber. In the first concentrating module 220 in the present example, the feed solution 110 fed from the feed solution tank 210 and the draw solution 120 fed from the draw solution tank 230 are brought into contact via the first concentrating membrane 222.

The draw solution 120 in the present example includes water and isopropanol. The draw solution 120 has a higher chemical potential than the feed solution 110. Taking this difference of chemical potential as a driving force, water included in the feed solution 110 moves toward the draw solution 120 via the first concentrating membrane 222. This amount of movement per unit time is referred to as a flux in kg/m²h. The flux decided by a property, such as a pore diameter, of the first concentrating membrane 222 is referred to as an initial flux, and the actual flux during the operation of the concentrating apparatus 200 is referred to as a real flux. For example, the real flux is decided by the initial flux and a chemical potential difference between the draw solution 120 and the feed solution 110.

The first concentrating module 220 concentrates the feed solution 110 by separating water from the feed solution 110. Since the FO method does not require pressurization or heating, it can produce a concentrated solution without denaturing the solute in the feed solution 110.

In an example, the produced concentrated solution is collected and returned to the feed solution tank 210. In this case, the solution in an initial state which is stored in the feed solution tank 210 before the start of operation of the concentrating apparatus 200 may be referred to as the feed solution 110, and the solution which is stored in the feed solution tank 210 before the start of operation of the concentrating apparatus 200 may be referred to as the concentrated solution. Alternatively, the produced concentrated solution may be stored in a tank separated from the feed solution tank 210.

The draw solution 120 in contact with the feed solution 110 in the first concentrating module 220 is collected and returned to the draw solution tank 230. The draw solution 120 is diluted by water moved from the feed solution 110. The draw solution tank 230 may be connected with a reproduction apparatus that supplies isopropanol to the diluted draw solution 120 or concentrates the diluted draw solution 120 by evaporation or the like.

The concentrating apparatus 200 may further include a second concentrating module 240, a feed solution pump 245, a cooling water tank 250, and a cooling water pump 255. The second concentrating module 240 includes one or more second concentrating membranes 242.

The feed solution tank 210 feeds the feed solution 110 to the second concentrating module 240 by the feed solution pump 245. The feed solution 110 may be heated to 40 to 50°C with hot water before being fed to the second concentrating module 240. The pumping capacity of the feed solution pump 245 affects the flow rate, namely linear velocity, of the feed solution 110 in the second concentrating module 240. The feed solution tank 210 may include a sensor that acquires information such as the temperature and the storage amount of the feed solution 110 in the second concentrating module 240.

The second concentrating module 240 includes one or more second concentrating membranes 242. The cooling water tank 250 stores cooling water 130. The cooling water tank 250 feeds the cooling water 130 to the second concentrating module 240 by the cooling water pump 255. The pumping capacity of the cooling water pump 255 affects the flow rate, namely linear velocity, of the cooling water 130 in the second concentrating module 240.

The second concentrating module 240 in the present example concentrates the feed solution 110 by a membrane distillation (MD) method. The second concentrating membrane 242 in the present example is a hydrophobic porous dry membrane (MD membrane) in a shape of hollow fiber. The surface of the MD membrane may be coated with a water-repellent. The real flux of the second concentrating membrane 242 is decided by the initial flux and the vapor pressure difference between the cooling water 130 and the feed solution 110.

**In** the second concentrating module 240 in the present example, the feed solution 110 fed from the feed solution tank 210, and the cooling water 130 fed from the cooling water tank 250 are brought into contact via the second concentrating membrane 242. The cooling water 130 has a lower vapor pressure than the feed solution 110. Taking this vapor pressure difference as the driving force, the solvent included in the feed solution 110 moves toward the cooling water 130 via the second concentrating membrane 242.

The second concentrating module 240 concentrates the feed solution 110 by separating acetonitrile from the feed solution 110. Since the MD method does not require pressurization or heating, it can produce a concentrated solution without denaturing the solute in the feed solution 110.

**In** an example, the produced concentrated solution is collected and returned to the feed solution tank 210. Alternatively, the produced concentrated solution may be stored in a tank separated from the feed solution tank 210.

The cooling water 130 in contact with the feed solution 110 in the second concentrating module 240 may be collected and returned to the cooling water tank 250. The cooling water 130 includes acetonitrile which moved from the feed solution 110. Alternatively, the cooling water 130 collected from the second concentrating module 240 may be extracted by an extracting pump. The cooling water tank 250 may include a sensor that acquires information such as the temperature and the storage amount of the cooling water 130. The cooling water tank 250 may be connected with a cooling water replenishing apparatus.

Note that in the concentrating apparatus 200 shown in Fig.1, although the first concentrating module 220 and the second concentrating module 240 are provided in parallel, in another example, the first concentrating module 220 and the second concentrating module 240 may be provided in series. The concentrating apparatus 200 may include the first concentrating module 220 and the second concentrating module 240 which is provided at a stage after the first concentrating module 220, supply the concentrated solution concentrated by the first concentrating module 220 to the second concentrating module 240, collect the concentrated solution further concentrated by the second concentrating module 240, and return the concentrated solution to the feed solution tank 210. Alternatively, the first concentrating module 220 may be provided at a stage after the second concentrating module 240.

Alternatively, the concentrating apparatus 200 may concentrate the feed solution 110 only by the second concentrating module 240. **In** this case, the feed solution pump 215, the first concentrating module 220, the draw solution tank 230 and the draw solution pump 235 may not be provided in the concentrating apparatus 200.

### (Example 1)

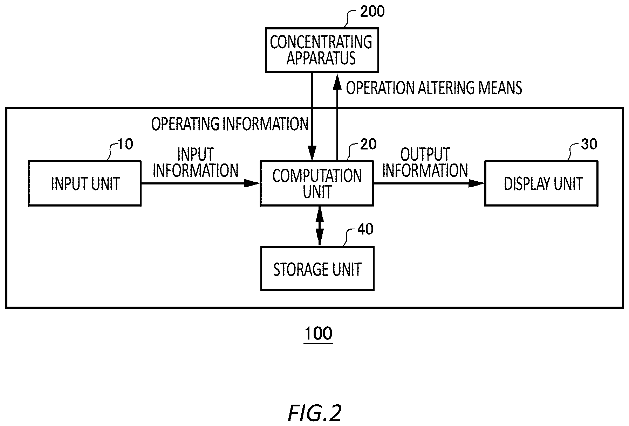

Fig. 2 illustrates an example of a configuration of he assistance apparatus 100 according to Example 1. The assistance apparatus 100 assists in the production of the concentrated solution by the concentrating apparatus 200. The assistance apparatus 100 is connected with the concentrating apparatus 200 via a wireless or wired connection. The assistance apparatus 100 includes an input unit 10, a computation unit 20, a display unit 30, and a storage unit 40.

The input unit 10 inputs input information including membrane information and feed solution information. The feed solution information is information of the feed solution 110 supplied to the concentrating apparatus 200. **In** an example, the membrane information includes a manufacturing number and membrane area of the first concentrating membrane 222. The feed solution information includes the weight, volume, composition, temperature, and flow rate of the feed solution 110. The input unit 10 may input the input information by an input apparatus such as a keyboard or may input the input information via communication with a server. The input unit 10 may be integral with the display unit 30. Also, the input information may include draw solution information including a weight, volume, composition, temperature, and flow rate of the draw solution 120, may include cooling water information including a weight, volume, composition, temperature and flow rate of the cooling water 130, and may include a weight, volume, and composition of a target concentrated solution.

The computation unit 20 calculates, based on the input information, predicted concentrated solution information including the composition of the solute and the solvent in the concentrated solution. The predicted concentrated solution information may further include at least any of a predicted concentration ratio or predicted concentration time of the feed solution 110. Furthermore, the computation unit 20 may calculate precipitation information of the solute from the concentrated solution, which is predicted based on the input information. Also, the computation unit 20 may calculate, based on the input information, draw solution information and cooling water information as an operation start condition under which a target concentrated solution composition can be reached. Furthermore, the operation start condition may be calculated, based on the precipitation information, under which the target concentrated solution composition can be reached while avoiding precipitation of the solute. The computation unit 20 outputs the calculated predicted concentrated solution information and precipitation information as output information to the display unit 30.

The assistance apparatus 100 may acquire information detected by various sensors provided in the concentrating apparatus 200 periodically. **In** an example, the sensor is a thermometer, gravimeter, liquid level gauge, spectrophotometer, infrared sensor, light scattering detector or turbidimeter, etc.

Note that the computation unit 20 may output the output information by using a formula or a model obtained by simulation, machine learning and a combination thereof. **In** an example, the computation unit 20 uses ridge regression, PLS regression, random forests, SVR, etc. as regression analysis, and uses genetic algorithms as machine learning. Also, the computation unit 20 may output, based on the input information, the output information by using a formula or a model obtained by simulation, machine learning and a combination thereof.

The display unit 30 displays the output information acquired from the computation unit 20. For example, the display unit 30 displays the output information on a display. The display unit 30 may transmit the output information to an external server or the like.

The storage unit 40 stores information which is required for the computation unit 20 to conduct computation. In an example, the storage unit 40 stores, as a previous processing result, identification information and the corresponding product specification of the first concentrating membrane 222 and the second concentrating membrane 242, previously calculated predicted concentrated solution information, precipitation information and the corresponding operating condition of the concentrating apparatus 200 in association. In an example, the identification information of the first concentrating membrane 222 and the second concentrating membrane 242 includes a product number, and the product specification includes a pore diameter, an area and so on.

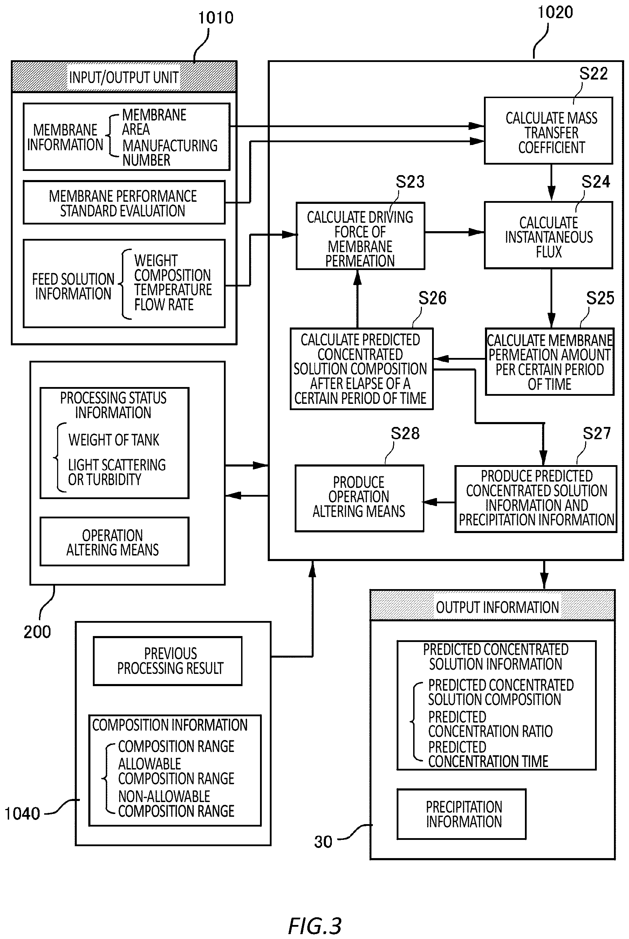

Fig. 3 is a block diagram showing an example of an assistance method by the assistance apparatus 100. Herein, in the concentrating apparatus 200 assisted by the assistance apparatus 100, the first concentrating module 220 with the first concentrating membrane 222 which is a FO membrane, and the second concentrating module 240 with the second concentrating membrane 242 which is a MD membrane are provided in parallel. The feed solution 110 in the present example includes a peptide as the solute, water as the first solvent, and acetonitrile as the second solvent.

In step S22, the computation unit 20 acquires the input information including membrane information, feed solution information and membrane performance standard evaluation result from the input unit 10, and calculates, based on the acquired membrane information and the previous processing result stored in the storage unit 40, a mass transfer coefficient. The mass transfer coefficient is an amount of movement, namely flux, of the solvent to be separated per unit time in kg/m²h/kPa, which is predicted in the first concentrating membrane 222 and the second concentrating membrane 242 respectively.

The standard evaluation of the membrane performance is performed to calculate the mass transfer coefficient at the respective initial states of the first concentrating membrane 222 and the second concentrating membrane 242. The membrane information includes a manufacturing number and a membrane area of each of the first concentrating membrane 222 and the second concentrating membrane 242. Tthe membrane area is the total contact area of the first concentrating membrane 222 and the second concentrating membrane 242, respectively, with the feed solution 110. When the product specification corresponding to the manufacturing number is stored in the storage unit 40, the membrane information may include the quantity of the first concentrating membrane 222 and the second concentrating membrane 242, respectively, instead of the membrane area.

Also, in step S23, the computation unit 20 calculates, based on the acquired feed solution information, the draw solution information and the cooling water information, the driving force of the membrane permeation. The driving force of the membrane permeation is the driving force that moves the solvent separated from the feed solution 110, namely the solvent to be separated, to pass through the first concentrating membrane 222 and the second concentrating membrane 242, respectively. The feed solution information includes a weight, volume, composition, temperature and flow rate of the feed solution 110. The weight, volume and temperature of the feed solution 110 may be the weight, volume and temperature before the start of operation of the feed solution tank 210. The flow rate of the feed solution 110 may be decided by the pumping capacity of the feed solution pump 215. The draw solution information includes the weight, volume, composition, temperature and flow rate of the draw solution 120. The weight, volume and temperature of the draw solution 120 may be the weight, volume and temperature before the start of operation of the draw solution tank 230. The flow rate of the draw solution 120 may be decided by the pumping capacity of the draw solution pump 235. The cooling water information includes the weight, volume, composition, temperature and flow rate of the cooling water 130. The weight, volume and temperature of the cooling water 130 may be the weight, volume and temperature before the start of operation of the cooling water tank 250. The flow rate of the cooling water 130 may be decided by the pumping capacity of the cooling water pump 255. In an example, the computation unit 20 calculates, by using an Aspen simulation soft, based on the chemical potential of the feed solution 110 and the draw solution 120, the driving force of the first concentrating membrane 222. In an example, the computation unit 20 calculates,the driving force of the second concentrating membrane 242 by using a Wilson formula, based on the vapor pressure of the feed solution 110 and the vapor pressure of the cooling water 130.

In step S24, the computation unit 20 calculates, an instantaneous flux based on the driving force of the membrane permeation and the mass transfer coefficient. In an example, the unit of the instantaneous flux is kg/m²h.

In step S25, the computation unit 20 calculates, based on the instantaneous flux, a membrane permeation amount per certain period of time. In an example, the membrane permeation amount per certain period of time is the amount of the moving solvent to be separated that passes through the first concentrating membrane 222 and the second concentrating membrane 242, respectively, during a certain period of time, for example, one minute.

In step S26, the computation unit 20 calculates, based on the membrane permeation amount per certain period of time, predicted concentrated solution composition after elapse of a certain period of time. Then return to step S23, and repeat the process of step S23 to step S26. This iterative process provides the predicted concentrated solution composition chronologically. This iterative process may be performed concurrently with the actual operation of the concentrating apparatus 200.

In step S27, the computation unit 20 generates predicted concentrated solution information. The predicted concentrated solution information includes the predicted concentrated solution composition. The predicted concentrated solution information may further include at least any of a predicted concentration ratio or predicted concentration time after elapse of a certain period of time. The predicted concentration ratio is a ratio of predicted solute concentration of the concentrated solution after the elapse of a certain period of time, to the solute concentration of the feed solution 110. The predicted concentration time is predicted time until the concentrated solution with a target solute concentration is produced.

Furthermore, based on the predicted concentrated solution information, the computation unit 20 determines the presence or absence of precipitation of the solute or calculates a precipitation amount of the solute, and produces precipitation information indicating the presence or absence of precipitation of the solute or the precipitation amount of the solute.

Furthermore, the computation unit 20 may compare the precipitation amount of the solute to a predetermined allowable precipitation amount. The precipitation information may further indicate whether the precipitation amount of the solute is within the allowable range. Furthermore, the computation unit 20 may compare the predicted concentration information to the target concentrated solution composition. If the result indicates deviation, the computation unit 20 may generate and present draw solution information and cooling water information such that the predicted concentration information matches the target concentrated solution composition, as a recommended operation condition. Also, when generating the draw solution information and cooling water information, the computation unit 20 may select, from the above-mentioned precipitation information, an operation condition under which the solute does not precipitate.

Furthermore, during the operation of the concentrating apparatus 200, the computation unit 20 may acquire processing status information from the concentrating apparatus 200, and update, based on the acquired processing status information, the predicted concentrated solution information and the precipitation information. The processing status information indicates the processing status of the first concentrating module 220 and the second concentrating module 240. In an example, the processing status information includes the weight or volume of the draw solution tank 230 and the cooling water tank 250.

Alternatively, the computation unit 20 may generate, based on the acquired processing status information, precipitation information. In an example, the processing status information may further include a measurement value of a light scattering detector or a turbidimeter or the like, which is provided in at least any of the first concentrating module 220 or the second concentrating module 240. Based on these measurement values, the computation unit 20 may determine the presence or absence of precipitation of the solute, or calculate the precipitation amount of the solute, and generate precipitation information indicating the presence or absence of precipitation of the solute or the precipitation amount of the solute.

The computation unit 20 outputs, as the output information, the generated predicted concentrated solution information and precipitation information to the display unit 30. The display unit 30 displays the acquired output information. Furthermore, the computation unit 20 may output the generated predicted concentrated solution information and precipitation information to the storage unit 40.

In step S28, the computation unit 20 produces, based on the predicted concentrated solution information, an operation altering means for altering the operating condition of the concentrating apparatus 200, and output the operation altering means to the concentrating apparatus 200. When precipitation of the solute is predicted, the computation unit 20 may generate the operation altering means from the predicted concentrated solution information. The operating condition of the concentrating apparatus 200 include at least any of the flow rate, temperature or pressure of the feed solution 110, the flow rate, temperature, concentration or pressure of the draw solution 120 supplied to the first concentrating module 220, or the flow rate, temperature, concentration or pressure of the cooling water 130 supplied to the second concentrating module 240.

Furthermore, the computation unit 20 may acquire the composition information of the concentrated solution from the storage unit 40. The composition information indicates, in the operating condition applied to the concentrating apparatus 200, a composition range that is a possible range of the composition of the concentrated solution, an allowable composition range that is a range which allows operation of the concentrating apparatus 200 in the composition range, and a non-allowable composition range that is a range which can not allow operation of the concentrating apparatus 200 in the composition range. **In** an example, the non-allowable composition range is a range of the composition of the concentrated solution in a previous processing result where precipitation of peptide exceeding the allowable precipitation amount is recorded. The allowable composition range may be a range other than the allowable composition range in the composition range.

The non-allowable composition range may further include a range of the composition of the concentrated solution where the operation of the concentrating apparatus 200 can not be allowed due to the concentrating apparatus 200. The range of the composition of the concentrated solution which can not allow the operation of the concentrating apparatus 200 due to the concentrating apparatus 200 is a range of the composition of the concentrated solution that can not be allowed because the concentrating apparatus 200 does not operate normally, regardless the presence or absence of precipitation of the peptide. **In** an example, a range where the concentration of acetonitrile in the concentrated solution exceeds an upper limit value is a range of the composition of the concentrated solution that can not be allowed, because the water ratio of the concentrated solution is lowered and the second concentrating membrane 242 loses its hydrophobic property.

When precipitation of peptide in the concentrated solution has been detected, the computation unit 20 may update the composition information. The computation unit 20 may alter, further based on the acquired composition information, the operating condition of the concentrating apparatus 200.

The concentrating apparatus 200 alters the operating condition according to the operation altering means. For example, when the operation altering means indicates that the flow rate of the cooling water 130 =0, the concentrating apparatus 200 stops the cooling water pump 255. When the operation altering means indicates the concentration of the draw solution 120, the concentrating apparatus 200 adds isopropanol to the draw solution tank 230, so that the draw solution 120 inside the draw solution tank 230 has an instructed concentration.

In this manner, with the assistance method by the assistance apparatus 100, the operating condition of the concentrating apparatus 200 can be adjusted automatically to an optimal condition, and a user can handle the concentrating apparatus 200 more conveniently. Also, when the solute is determined to precipitate, the operation of the concentrating apparatus 200 can be stopped. Furthermore, data at the time of solute precipitation can be stored and utilized for the next operation.

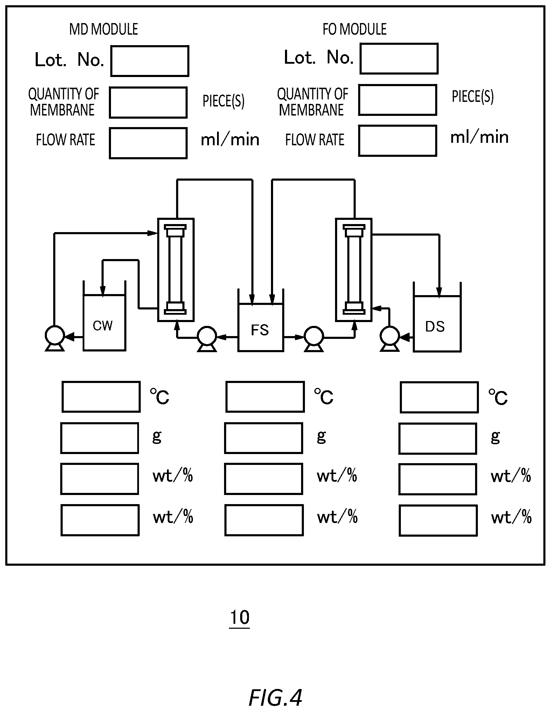

Fig. 4 illustrates an example of display on the input unit 10. In an example, the input unit 10 displays an input screen of the manufacturing number, i.e. Lot. No., of the FO membrane, i.e. first concentrating membrane 222, in the FO module, i.e. the first concentrating module 220, and the MD membrane, i.e. second concentrating membrane 242, in the MD module, i.e. the second concentrating module 240, the quantity of the membrane and the flow rate. Furthermore, the input unit 10 may display the input screen of the temperature, weight, volume and concentration in the FS tank, i.e. the feed solution tank 210, the DS tank, i.e. the draw solution tank 230 and the CW tank, i.e. the cooling water tank 250. The input unit 10 acquires various data input via the input screen by a user.

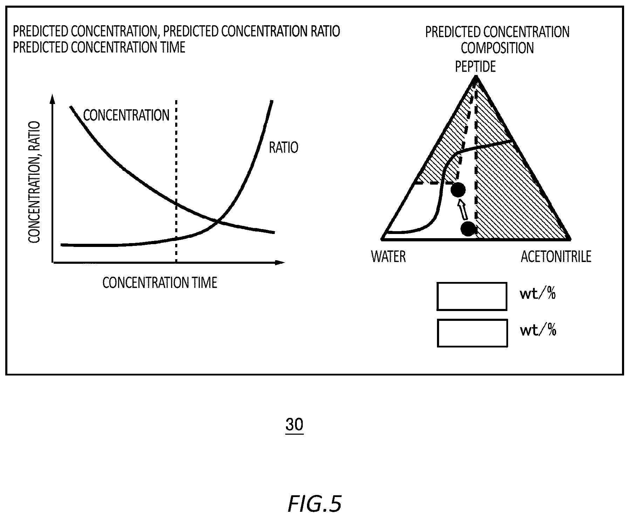

Fig. 5 illustrates an example of display on the display unit 30. In an example, the display unit 30 displays a graph showing a relationship between the predicted concentration time and the predicted concentration of acetonitrile in the concentrated solution as well as the predicted concentration ratio of the concentrated solution, i.e. the ratio of the predicted peptide concentration in the concentrated solution to that in the feed solution, and the predicted concentrated solution composition.

The display unit 30 may display the predicted concentrated solution composition superimposed on the composition information of the concentrated solution acquired from the storage unit 40. The composition information may be a phase diagram showing the ratio of peptide, water and acetonitrile in the concentrated solution. In an example, the phase diagram shows the composition range that is a possible range of the composition of the concentrated solution, as a triangle with the three components of peptide, water and acetonitrile in the concentrated solution at the vertices, and shows the concentrated solution composition as one or more points on the triangle. The display unit 30 may further display a predicted concentration, for example, the concentration of peptide and acetonitrile.

The phase diagram may further show the range where the peptide is predicted to precipitate as the non-allowable composition range in the composition range by diagonal hatching on the triangle. The phase diagram may further show the range where the concentration of acetonitrile exceeds the upper limit value as the non-allowable composition range in the composition range by diagonal hatching on the triangle.

In this manner, by display unit 30 displaying the predicted concentrated solution composition and the non-allowable composition range in real time and visually, the user can easily check that the concentrating apparatus 200 is automatically producing the concentrated solution without incurring precipitation of peptide or malfunction of the concentrating apparatus 200.

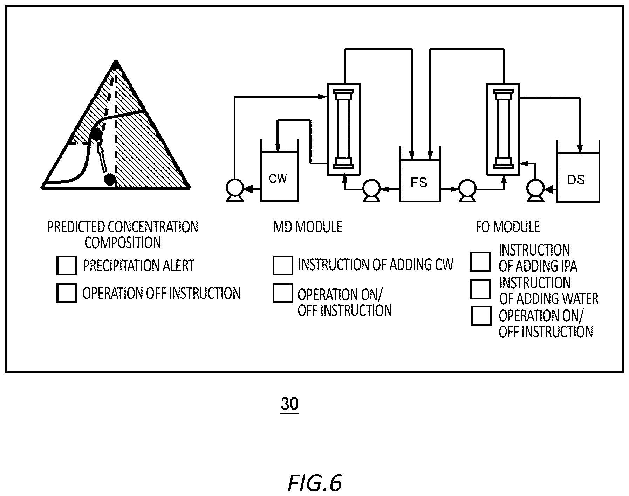

Fig. 6 illustrates another example of display on the display unit 30. The display unit 30 may display a precipitation alert when precipitation of peptide is detected or predicted. The display unit 30 may further display contents to be altered of the operating condition when the computation unit 20 outputs operation altering means to the concentrating apparatus 200. In an example, the display unit 30 may display that either of an instruction of adding IPA, i.e. isopropanol, or water to the DS tank, i.e. the draw solution tank 230, operation ON/OFF instruction to the first concentrating module 220, an instruction of adding CW, i.e. cooling water 130, to the CW tank, i.e. cooling water tank 250, or operation ON/OFF instruction to the second concentrating module 240 has been issued.

In this manner, even if the operating condition of the concentrating apparatus 200 is altered due to precipitation of peptide or the like, by displaying an alert and contents to be altered of the operating condition on the display unit 30, the user can easily check the operation situation of the concentrating apparatus 200.

### (Example 2)

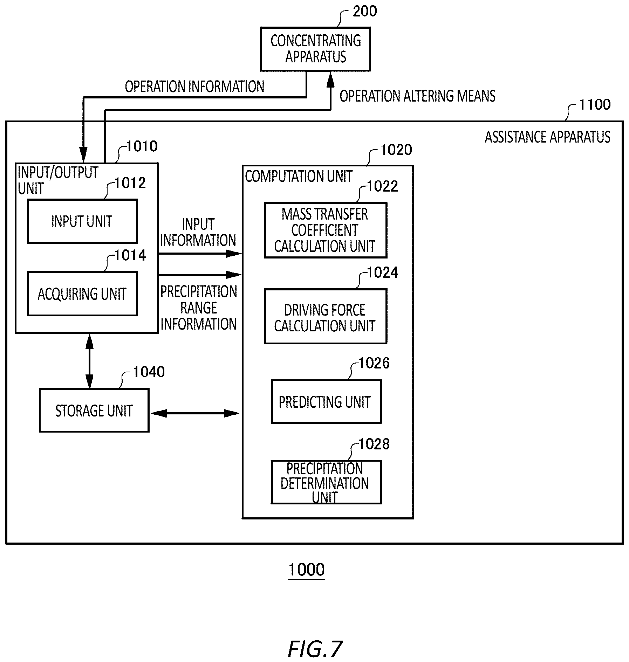

Fig. 7 illustrates an example of a configuration of a manufacturing apparatus 1000 according to Example 2. The manufacturing apparatus 1000 includes a concentrating apparatus 200 and an assistance apparatus 1100 which assists production of a concentrated solution by the concentrating apparatus 200. The concentrating apparatus 200 in the present example may be the same as the concentrating apparatus 200 in Example 1. The assistance apparatus 1100 includes an input/output unit 1010, a computation unit 1020 and a storage unit 1040.

The input/output unit 1010 acquires information required for computation of the computation unit 1020 and outputs the information to the computation unit 1020. Also, the input/output unit 1010 communicates with the concentrating apparatus 200 and an external server or the like, and performs information exchange. The input/output unit 1010 has an input unit 1012 and an acquiring unit 1014. The input unit 1012 inputs target concentrated solution information including target composition of the concentrated solution. The input unit 1012 may be an input apparatus such as a keyboard.

The acquiring unit 1014 acquires current concentrated solution information including the current composition of the concentrated solution from the concentrating apparatus 200. The composition of the concentrated solution may be acquired from a measurement value of a spectrophotometer, a light scattering detector or a turbidimeter, etc. These instruments are provided in at least any of a feed solution channel, a draw solution channel or a cooling water channel. The feed solution channel is a channel of the feed solution 110, or the concentrated solution, provided between the feed solution tank 210, and the first concentrating module 220 or the second concentrating module 240. The draw solution channel is a channel of the draw solution 120 provided between the draw solution tank 230 and the first concentrating module 220. The cooling water channel is a channel of the cooling water 130 provided between the cooling water tank 250 and the second concentrating module 240. The acquiring unit 1014 acquires, from the storage unit 1040, previous concentrated solution information including the previous composition of the concentrated solution. The previous concentrated solution information may include the composition of the concentrated solution at a predetermined time before the current time.

The acquiring unit 1014 acquires, from the storage unit 1040, precipitation range information of the solute. The precipitation range information includes the composition of the concentrated solution where precipitation of the solute has been detected. The acquiring unit 1014 may acquire composition information indicating a possible ratio of the solute, the first solvent and the second solvent in the concentrated solution, and acquire, based on the composition information, precipitation range information, from the storage unit 1040.

The acquiring unit 1014 acquires a list of operation altering means from the storage unit 1040, and outputs the list of operation altering means to the computation unit 1020. The acquiring unit 1014 may acquire the list of operation altering means according to a request from the computation unit 1020. The list of operation altering means is a list of parameters for altering operations of the concentrating apparatus 200. In an example, the operation altering means is a means that alters at least any parameter of the flow rate, temperature or pressure of the concentrated solution, the flow rate, temperature, concentration or pressure of the draw solution supplied to the first concentrating module 220, or the flow rate, temperature, concentration or pressure of the cooling water supplied to the second concentrating module 240. The operation altering means may be a new configured value of the target parameter.

The computation unit 1020 includes a mass transfer coefficient calculation unit 1022, a driving force calculation unit 1024, a predicting unit 1026 and a precipitation determination unit 1028. Note that the mass transfer coefficient calculation unit 1022, the driving force calculation unit 1024, the predicting unit 1026 and the precipitation determination unit 1028 are only units divided functionally, but not limited to physically separated units. The computation unit 1020 acquires the input information from an input/output unit 1010, and outputs the output information calculated based on the input information.

The mass transfer coefficient calculation unit 1022 calculates, based on the input information acquired from the input/output unit 1010, the mass transfer coefficient of the concentrating membrane. The input information includes at least target concentrated solution information, current concentrated solution information and previous concentrated solution information. When the concentrating apparatus 200 includes the first concentrating module 220 and the second concentrating module 240, the mass transfer coefficient calculation unit 1022 calculates each of a first mass transfer coefficient of the first concentrating membrane 222 and a second mass transfer coefficient of the second concentrating membrane 242.

The driving force calculation unit 1024 calculates, based on the input information acquired from the input/output unit 1010, the driving force for the concentrated solution to pass through the concentrating membrane. When the concentrating apparatus 200 includes the first concentrating module 220 and the second concentrating module 240, the driving force calculation unit 1024 calculates each of a first driving force of the first concentrating membrane 222 and a second driving force of the second concentrating membrane 242.

The predicting unit 1026 calculates, based on the mass transfer coefficient calculated by the mass transfer coefficient calculation unit 1022 and the driving force calculated by the driving force calculation unit 1024, the predicted concentrated solution information, including the composition of the concentrated solution after the elapse of a certain period of time, for example, one minute. When the concentrating apparatus 200 includes the first concentrating module 220 and the second concentrating module 240, the predicting unit 1026 calculates predicted concentrated solution information of the concentrated solution produced by a combination of the concentrated solution produced by the first concentrating module 220 and the concentrated solution produced by the second concentrating module 240.

The precipitation determination unit 1028 determines the presence or absence of precipitation of the solute based on the predicted concentrated solution information, the precipitation range information and the target concentrated solution information. The precipitation determination unit 1028 determines precipitation of the solute when the predicted composition of the concentrated solution after elapse of a certain period of time or later matches the composition of the concentrated solution where precipitation of the solute has been detected previously.

When precipitation of the solute has been determined, the predicting unit 1026 acquires the list of operation altering means from the input/output unit 1010, and updates, based on the driving force and the mass transfer coefficient calculated based on any operation altering means in the list of operation altering means, the predicted concentrated solution information.

The precipitation determination unit 1028 determines, based on the updated predicted concentrated solution information, the composition information, the precipitation range information and the target concentrated solution information, presence or absence of precipitation of the solute. The predicting unit 1026 updates the predicted concentrated solution information by using a new operation altering means, and the precipitation determination unit 1028 determines presence or absence of precipitation of the solute by using the updated predicted concentrated solution information, until precipitation of the solute is not determined. When the solute is determined not to precipitate, the input/output unit 1010 outputs the corresponding operation altering means to the concentrating apparatus 200. The concentrating apparatus 200 may alter the operation according to the acquired operation altering means.

The storage unit 1040 stores information required for computation of the computation unit 1020. In an example, the storage unit 1040 stores the composition of the concentrated solution acquired from the concentrating apparatus 200 chronologically. Also, the storage unit 1040 stores, as a previous processing result, identification information and corresponding product specification of the first concentrating membrane 222 and the second concentrating membrane 242, previously calculated predicted concentrated solution information, precipitation information and the operating condition of the corresponding concentrating apparatus 200 in association. In an example, the identification information of the first concentrating membrane 222 and the second concentrating membrane 242 includes a product number, and the product specification includes pore diameter, area and so on.

The assistance apparatus 1100 may further include a display unit which displays the output information acquired from the computation unit 1020. The display unit may display the input information and output information on a display, or may further display the composition information, the precipitation range information and so on used in computation of the computation unit 1020 on a display.

In this manner, with the manufacturing apparatus 1000 according to the present example, since presence or absence of precipitation of the solute can be determined, the user can handle the concentrating apparatus 200 conveniently using 2 different types of concentrating membranes. Also, when precipitation of the solute has been determined, since the operating means of the concentrating apparatus 200 can be altered, the concentrated solution with the target composition can be produced without precipitation of the solute.

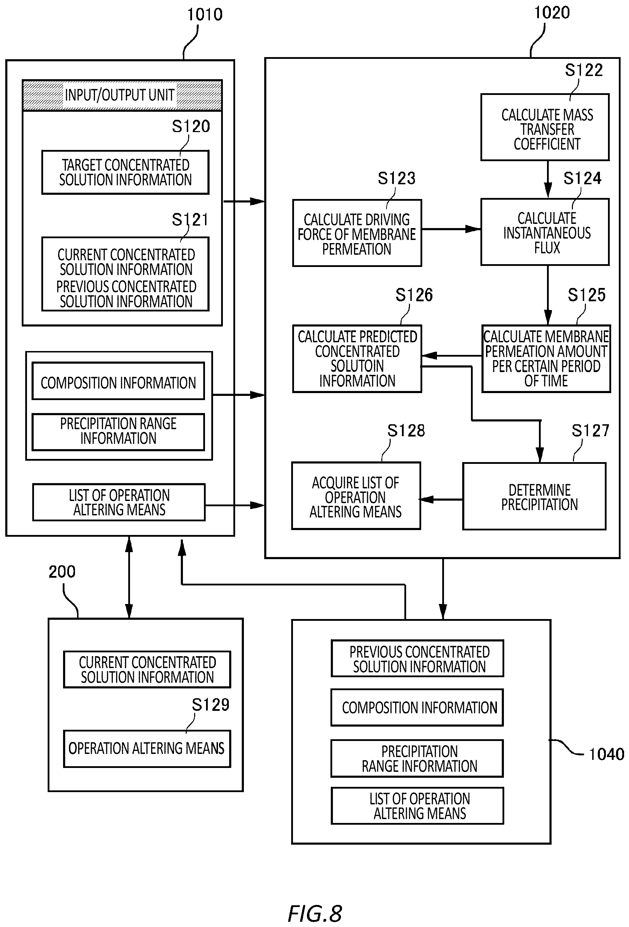

Fig. 8 is a block diagram showing an example of a manufacturing method of the manufacturing apparatus 1000. Herein, in the concentrating apparatus 200 of the manufacturing apparatus 1000, a first concentrating module 220 with a first concentrating membrane 222 which is a FO membrane, and a second concentrating module 240 with a second concentrating membrane 242 which is a MD membrane are provided in parallel. The feed solution 110 in the present example includes peptide as the solute, water as the first solvent and acetonitrile as the second solvent.

In step S120, the input/output unit 1010 inputs the target concentrated solution information including the target composition of the concentrated solution. In step S121, the input/output unit 1010 acquires, from the concentrating apparatus 200, the current concentrated solution information including the current composition of the concentrated solution, and acquires, from the storage unit 1040, the previous concentrated solution information including the previous composition of the concentrated solution. In step S121, the input/output unit 1010 may further acquire, from the storage unit 1040, the composition information and the precipitation range information of the concentrated solution. The composition information indicates a possible ratio of the solute, the first solvent and the second solvent in the concentrated solution which is concentrated under the same operating condition previously. The precipitation range information includes the composition of the concentrated solution where precipitation of the solute has been detected in the concentrated solution which is concentrated under the same operating condition previously.

In step S122, the computation unit 1020 acquires, from the input/output unit 1010, the input information including the target concentrated solution information, the current concentrated solution information and the previous concentrated solution information, and calculates the mass transfer coefficient based on the acquired current concentrated solution information and previous concentrated solution information. The input information may further include the weight, volume, composition, temperature and flow rate of the feed solution 110, the measurement values of the spectrophotometer, the light scattering detector or turbidimeter, etc., the weight or volume of the draw solution tank 230 and the cooling water tank 250. The mass transfer coefficient is an amount of movement, i.e. flux, of the solvent to be separated per unit of time in kg/m²h/kPa. The mass transfer coefficient includes the first mass transfer coefficient of the first concentrating membrane 222 and the second mass transfer coefficient of the second concentrating membrane 242.

In step S123, the computation unit 1020 calculates, based on the current concentrated solution information and the previous concentrated solution information, the driving force of membrane permeation. The driving force of membrane permeation is the driving force for the solvent, i.e. solvent to be separated, separated from the feed solution 110 or the concentrated solution to move to pass through the concentrating membrane. The driving force includes the first driving force for the first solvent, i.e. water, to pass through the first concentrating membrane 222 and the second driving force for the second solvent, i.e. acetonitrile, to pass through the second concentrating membrane 242. In an example, the computation unit 1020 calculates, based on the chemical potential between the feed solution 110 or concentrated solution, and the draw solution 120, the first driving force by using the Aspen simulation soft. In an example, the computation unit 20 calculates, based on the vapor pressure of the feed solution 110 or concentrated solution, and the vapor pressure of the cooling water 130, the second driving force by using the Wilson formula.

Note that the input/output unit 1010 may perform step S121 periodically and output the current concentrated solution information and the previous concentrated solution information to the computation unit 1020 periodically.

In step S124, the computation unit 1020 calculates, based on the driving force of membrane permeation and the mass transfer coefficient, the instantaneous flux. In an example, the unit of the instantaneous flux is kg/m²h. The instantaneous flux includes a first instantaneous flux of the first concentrating membrane 222 and a second instantaneous flux of the second concentrating membrane 242.

In step S125, the computation unit 1020 calculates the membrane permeation amount per certain period of time based on the instantaneous flux. In an example, the membrane permeation amount per certain period of time includes a first membrane permeation amount of the first solvent, i.e. water, and the second solvent, i.e. acetonitrile, that moves to pass through the first concentrating membrane 222, and a second membrane permeation amount of the second solvent, i.e. acetonitrile, that moves to pass through the second concentrating membrane 242 in a certain period of time, for example, one minute.

In step S126, the computation unit 1020 calculates, based on the membrane permeation amount per certain period of time, the predicted concentrated solution information including the composition of the concentrated solution predicted after elapse of a certain period of time. The computation unit 1020 may repeat the process of step S122 to step S126 periodically. This iterative process provides the predicted concentrated solution information chronologically. This iterative process may be performed concurrently with acquiring the current concentrated solution information and the previous concentrated solution information.

In step S127, the computation unit 1020 determines, based on the predicted concentrated solution information, the composition information, the precipitation range information of the solute and the target concentrated solution information, presence or absence of precipitation of the solute. When the composition of the concentrated solution predicted after elapse of a certain period of time or later matches the composition of the concentrated solution where precipitation of the solute has been detected previously, the solute is determined to precipitate. Note that when the assistance apparatus 1100 of the manufacturing apparatus 1000 includes a display unit, the display unit may display the predicted concentrated solution information, the precipitation range information and the target concentrated solution information in association with the composition information visually.

When the solute is determined to precipitate, in step S128,the computation unit 1020 acquires the list of operation altering means from the input/output unit 1010. The input/output unit 1010 may acquire the list of operation altering means from the storage unit 1040 according to the request from the computation unit 1020. The list of operation altering means is a list of parameters for altering operations of the concentrating apparatus 200. **In** an example, the operation altering means is a means for altering a parameter of at least any of the flow rate, temperature or pressure of the concentrated solution, the flow rate, temperature, concentration or pressure of the draw solution supplied to the first concentrating module 220, or the flow rate, temperature, concentration or pressure of the cooling water supplied to the second concentrating module 240. The operation altering means may be a new configured value of the target parameter.

Then, the computation unit 1020 updates the predicted concentrated solution information based on the driving force and the mass transfer coefficient which are calculated based on either operation altering means in the list of operation altering means, and determine presence or absence of precipitation of the solute based on the updated predicted concentrated solution information, composition information, precipitation range information and target concentrated solution information. When the solute is determined not to precipitate, the computation unit 1020 repeats step S122 to 127 and updates the predicted concentrated solution information by using the new operation altering means, and determines presence or absence of precipitation of the solute by using the updated predicted concentrated solution information.

When the solute is determined not to precipitate, in step S129, the input/output unit 1010 outputs the corresponding operation altering means to the concentrating apparatus 200. The concentrating apparatus 200 may alter the acquired operating condition according to the operation altering means. For example, when the operation altering means indicates the flow rate of the cooling water 130 =0, the concentrating apparatus 200 stops the cooling water pump 255. When the operation altering means indicates the concentration of the draw solution 120, the concentrating apparatus 200 adds isopropanol or water to the draw solution tank 230 so that the draw solution 120 inside the draw solution tank 230 has an instructed concentration.

In this manner, with the manufacturing method according to the present example, since presence or absence of precipitation of the solute can be determined, the user can handle the concentrating apparatus 200 conveniently using 2 different types of concentrating membranes. Also, when precipitation of the solute has been determined, since the operating means of the concentrating apparatus 200 can be altered, the concentrated solution with the target composition can be produced without precipitation of the solute.

### (Example 3)

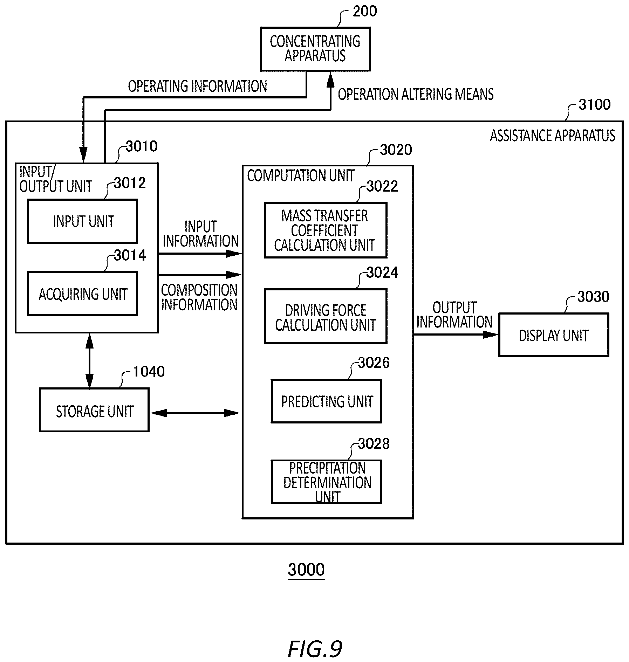

Fig. 9 illustrates an example of a configuration of an assistance apparatus 3100 according to Example 3. The assistance apparatus 3100 assists the production of the concentrated solution by the concentrating apparatus 200. The concentrating apparatus 200 in the present example may be the same as the concentrating apparatus 200 in Example 1. The assistance apparatus 3100 includes an input/output unit 3010, a computation unit 3020, a display unit 3030 and a storage unit 3040. Since the assistance apparatus 3100 in the present example has a similar configuration to the assistance apparatus 1100 in Example 2 except for the point of including a display unit 3030, the display unit 3030 is mainly described herein, and descriptions about common items are to be omitted.

The display unit 3030 displays the output information acquired from the computation unit 20. In an example, the output information includes the predicted concentrated solution information, the target concentrated solution information, the composition information and the precipitation range information. The composition information in the present example visually indicates a possible ratio of the solute, the first solvent and the second solvent. The display unit 3030 in the present example displays the precipitation range information of the solute in association the composition information. The display unit 3030 may further display the predicted concentrated solution information and the target concentrated solution information in association with the composition information.

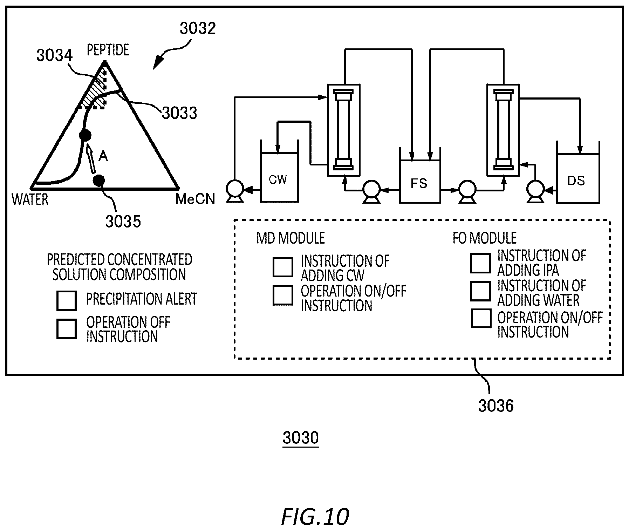

Fig. 10 illustrates an example of the display unit 3030. In an example, the display unit 3030 displays the composition information 3032 of the concentrated solution and the list of operation altering means 3036.

The composition information 3032 may be a phase diagram showing the ratio of peptide, water and acetonitrile in the concentrated solution. In an example, the phase diagram shows the composition range, which is a possible range of the composition of the concentrated solution, as a triangle with the three components of solute, i.e. peptide, water and acetonitrile, i.e. MeCN, in the concentrated solution at vertices. The display unit 3030 in the present example further displays the precipitation line 3033 indicating the composition of the concentrated solution where precipitation has been detected previously on the phase diagram. In the phase diagram of Fig. 10, the concentration of acetonitrile, i.e. MeCN, is low to the left of the precipitation line 3033, indicating that peptide precipitation is predicted. The precipitation line 3033 is an example of the precipitation range information.

The display unit 3030 in the present example further displays the target concentrated solution composition 3034 and the predicted concentrated solution composition 3035 on the phase diagram. Fig. 10 shows the range of target concentrated solution composition 3034 with diagonal hatching and predicted concentrated solution composition 3035 with black circles. The display unit 3030 may display the predicted concentrated solution composition 3035 at a plurality of time points on a phase diagram and further indicate the transition of the predicted concentrated solution composition 3035 with an arrow A. This allows the user to visually see whether the composition of the concentrated solution is approaching the target composition and whether precipitation is predicted. The display unit 3030 may display a precipitation alert when precipitation of peptide is detected or predicted.

The computation unit 20 determines the precipitation of the peptide, and as a result of determining the presence or absence of precipitation of peptide by using the updated predicted concentrated solution information, if the peptide is determined not to precipitate, the display unit 3030 in the present example displays the corresponding operation altering means in the list of operation altering means 3036. In an example, the list of operation altering means 3036 may display that either of an instruction of adding IPA, i.e. isopropanol, or water to the DS tank, i.e. the draw solution tank 230, operation ON/OFF to the first concentrating module 220, an instruction of adding CW, i.e. cooling water 130, to the CW tank, i.e. cooling water tank 250, or operation ON/OFF instruction to the second concentrating module 240 has been issued.

In this manner, even if the operation altering means is output to the concentrating apparatus 200 due to precipitation of peptide, by displaying an alert and the operation altering means on the display unit 3030, the user can easily confirm the operation situation of the concentrating apparatus 200.

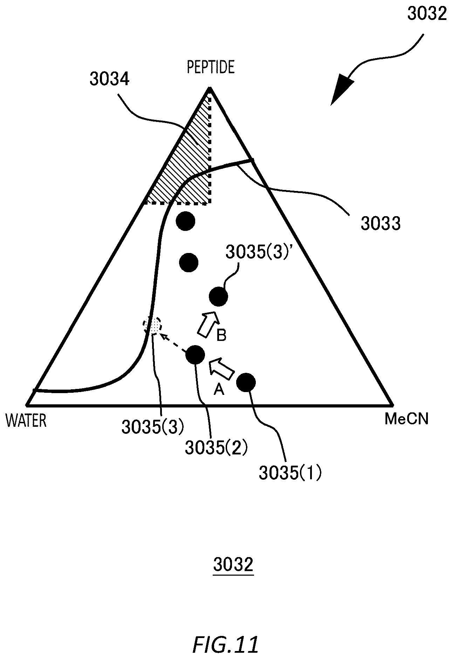

Fig. 11 illustrates an example of composition information 3032 shown on the display unit 3030. The display unit 3030 shows the plurality of predicted concentrated solution compositions 3035 acquired chronologically, numbered in brackets at the end of the sign, in ascending order from oldest to newest in chronological order. When an extending line of the arrow A indicating the transition from the predicted concentrated solution composition 3035(1) to the predicted concentrated solution composition 3035(2) intersects with the precipitation line 3033, precipitation in the next predicted concentrated solution composition 3035 (3) is predicted.

When the computation unit 3020 updates the predicted concentrated solution information by using new operation altering means, the display unit 3030 may display a composition candidate 3035(3)' corresponding to the updated predicted concentrated solution information, and the operation altering presentation information indicating transition from the predicted concentrated solution composition 3035(2) to the composition candidate 3035(3)'. In Fig. 11, the operation altering presentation information is displayed on the phase diagram as an arrow B.

In this manner, even if the peptide is determined to precipitate, by displaying the operation altering presentation information on the display unit 3030, the user can know that precipitation is avoided by operation altering, and the predicted concentrated solution composition 3035 is changing toward the target concentrated solution composition 3034.

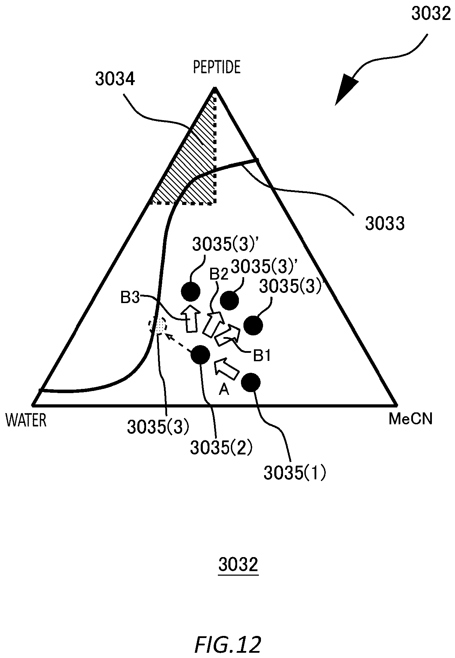

Fig. 12 illustrates another example of the composition information 3032 shown on the display unit 3030. In the present example, the plurality of pieces of operation altering presentation information is displayed on the phase diagram, different from the example of Fig. 10.

When peptide is determined to precipitate, the computation unit 3020 acquires the operation altering means, and calculates, based on the driving force and the mass transfer coefficient calculated based on the operation altering means, the candidate concentrated solution information including the composition candidate of the concentrated solution after elapse of a certain period of time. The computation unit 3020 may calculate a plurality of pieces of the candidate concentrated solution information. The display unit 3030 displays the plurality of composition candidates 3035(3)' corresponding to the plurality of pieces of candidate concentrated solution information and the recommended operation altering presentation information indicating the transition from the predicted concentrated solution composition 3035(2) to the composition candidate 3035(3)' as arrows B1 to B3 on the phase diagram.

By displaying the arrows B1 to B3 indicating the recommended operation altering presentation information on the display unit 3030, the user may input operation altering presentation information selected from the recommended operation altering presentation information, and output the corresponding operation altering means to the concentrating apparatus 200 according to the input of the user. **In** this manner, in order to obtain, for example, a concentrated solution including more water by removing more MeCN, the user can select to stop the first concentrating module 220 and replenish the cooling water 130 of the second concentrating module 240. Alternatively, in order to obtain a concentrated solution including more MeCN by removing more water, the user can select to stop the second concentrating module 240 and replenish the draw solution 120 of the first concentrating module 220, or the like.

An assistance method of the concentrating apparatus 200 by the assistance apparatus 3100 is provided in the present example.

The assistance method in the present example includes inputting target concentrated solution information including a target composition of the concentrated solution; acquiring current concentrated solution information including a current composition of the concentrated solution; acquiring previous concentrated solution information including a previous composition of the concentrated solution; calculating, based on the current concentrated solution information and the previous concentrated solution information, a mass transfer coefficient of the concentrating membrane; calculating, based on the current concentrated solution information and the previous concentrated solution information, a driving force for the concentrated solution to pass through the concentrating membrane; and calculating, based on the driving force and the mass transfer coefficient, predicted concentrated solution information including the composition of the concentrated solution after elapse of a certain period of time.

The assistance method in the present example further includes visually displaying the composition information of the concentrated solution, displaying the predicted concentrated solution information, the target concentrated solution information, and the precipitation range information of the solute in association with the composition information, determining the presence or absence of precipitation based on this information displayed in association with the composition information, and displaying the determination result.

The assistance method in the present example may further include deciding, when the solute is determined to precipitate, based on the precipitation range information and the target concentrated solution information displayed in association with the composition information, candidate concentrated solution information including a composition candidate after elapse of the certain period of time of the concentrated solution; and displaying, in association with the composition information, operation altering presentation information, i.e. arrow B, indicating a transition from the predicted concentrated solution information to the candidate concentrated solution information.

Alternatively, the assistance method in the present example may further include acquiring, when the solute is determined to precipitate, an operation altering means, and calculating, based on the driving force and the mass transfer coefficient calculated based on the operation altering means, candidate concentrated solution information including the composition candidate after elapse of the certain period of time of the concentrated solution; displaying, in association with the composition information, recommended operation altering information, i.e. arrows B1 to B3, indicating transition from the predicted concentrated solution information to the candidate concentrated solution information.

In this manner, with the assistance method in the present example, even if the solute is determined to precipitate, by visually displaying the operation altering presentation information, the user can know that precipitation is avoided by operation altering, and the predicted concentrated solution composition 3035 is changing toward to the target concentrated solution composition 3034.

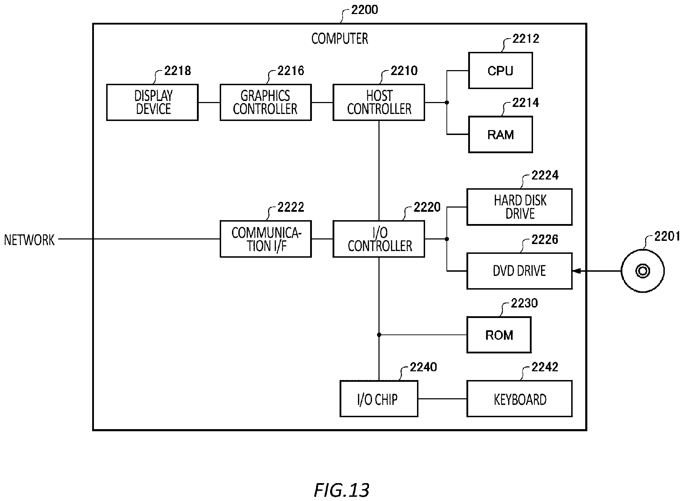

Fig. 13 illustrates an example of a computer 2200 in which a plurality of aspects of the present invention may be entirely or partially embodied. A program that is installed in the computer 2200 can cause the computer 2200 to function as operations associated with apparatuses according to the embodiments of the present invention or one or more sections of the apparatuses, or can cause the computer 2200 to execute the operations or the one or more sections thereof, and/or can cause the computer 2200 to execute processes according to the embodiments of the present invention or steps of the processes. Such a program may be executed by a CPU 2212 to cause a computer 2200 to execute certain operations associated with some or all of the blocks of flowcharts and block diagrams described herein.

The computer 2200 according to the present embodiment includes the CPU 2212, a RAM 2214, a graphics controller 2216, and a display device 2218, which are interconnected by a host controller 2210. The computer 2200 also includes input/output units such as a communication interface 2222, a hard disk drive 2224, a DVD-ROM drive 2226, and an IC card drive, which are connected to the host controller 2210 via an input/output controller 2220. The computer also includes legacy input/output units such as a ROM 2230 and a keyboard 2242, which are connected to the input/output controller 2220 via an input/output chip 2240.

The CPU 2212 operates in accordance with programs stored in the ROM 2230 and the RAM 2214, thereby controlling each unit. The graphics controller 2216 obtains image data generated by the CPU 2212 on a frame buffer or the like provided in the RAM 2214 or in the graphics controller 2216 itself, and causes the image data to be displayed on the display device 2218.

The communication interface 2222 communicates with other electronic devices via a network. The hard disk drive 2224 stores programs and data used by the CPU 2212 within the computer 2200. The DVD-ROM drive 2226 reads the programs or the data from a DVD-ROM 2201, and provides the hard disk drive 2224 with the programs or the data via the RAM 2214. The IC card drive reads the program and data from an IC card, and/or writes the program and data to the IC card.

The ROM 2230 stores therein a boot program or the like executed by the computer 2200 at the time of activation, and/or a program depending on the hardware of the computer 2200. The input/output chip 2240 may also connect various input/output units to the input/output controller 2220 via a parallel port, a serial port, a keyboard port, a mouse port, or the like.

A program is provided by the computer-readable medium such as the DVD-ROM 2201 or the IC card. The program is read from the computer-readable medium, installed in the hard disk drive 2224, the RAM 2214, or the ROM 2230, which is also an example of the computer-readable medium, and executed by the CPU 2212. The information processing described in these programs is read by the computer 2200 and provides cooperation between the programs and the above-described various types of hardware resources. An apparatus or method may be constituted by realizing the operation or processing of information in accordance with the usage of the computer 2200.

For example, when communication is executed between the computer 2200 and an external device, the CPU 2212 may execute a communication program loaded in the RAM 2214, and instruct the communication interface 2222 to process the communication based on the processing written in the communication program. The communication interface 2222, under control of the CPU 2212, reads transmission data stored on a transmission buffering region provided in a recording medium such as the RAM 2214, the hard disk drive 2224, the DVD-ROM 2201, or the IC card, and transmits the read transmission data to a network or writes reception data received from a network to a reception buffering region or the like provided on the recording medium.

In addition, the CPU 2212 may cause all or a necessary portion of a file or a database to be read into the RAM 2214, the file or the database having been stored in an external recording medium such as the hard disk drive 2224, the DVD-ROM drive 2226 (the DVD-ROM 2201), the IC card, etc., and execute various types of processing on the data on the RAM 2214. Then, the CPU 2212 writes the processed data back in the external recording medium.

Various types of information, such as various types of programs, data, tables, and databases, may be stored in the recording medium to undergo information processing. The CPU 2212 may execute, on the data read from the RAM 2214, various types of processing including various types of operations, information processing, conditional judgement, conditional branching, unconditional branching, information retrieval/replacement, or the like described throughout the present disclosure and specified by instruction sequences of the programs, and writes the results back to the RAM 2214. In addition, the CPU 2212 may retrieve information in a file, a database, or the like in the recording medium. For example, when a plurality of entries, each having an attribute value of a first attribute associated with an attribute value of a second attribute, is stored in the recording medium, the CPU 2212 may retrieve, out of the plurality of entries, an entry with the attribute value of the first attribute specified that meets a condition, read the attribute value of the second attribute stored in said entry, and thereby acquiring the attribute value of the second attribute associated with the first attribute meeting a predetermined condition.

The above-described program or software modules may be stored in the computer-readable medium on the computer 2200 or near the computer 2200. **In** addition, a recording medium such as a hard disk or a RAM provided in a server system connected to a dedicated communication network or the Internet can be used as a computer-readable medium, thereby providing the program to the computer 2200 via the network.

While the present invention has been described by way of the embodiments, the technical scope of the present invention is not limited to the above described embodiments. It is apparent to persons skilled in the art that various alterations or improvements can be made to the above described embodiments. It is apparent from the description of the claims that embodiments added with such alterations or improvements can also be included in the technical scope of the present invention.

Note that the operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process. Even if the operation flow is described by using phrases such as "first" or "next" in the scope of the claims, specification, or drawings, it does not necessarily mean that the process must be performed in this order.

### (Item 1)

An assistance method of a concentrating apparatus for producing a concentrated solution concentrated from a predetermined feed solution, wherein:
the feed solution at least includes a solute, a first solvent and a second solvent;
the concentrating apparatus includes a concentrating module that concentrate the feed solution via a concentrating membrane;
the assistance method comprising:
   acquiring feed solution information including weight, volume of the feed solution, composition of the solute, the first solvent and the second solvent, temperature and flow rate of;
   acquiring membrane information including area of the concentrating membrane; and
   outputting predicted concentrated solution information including composition of the solute, the first solvent and the second solvent in the concentrated solution.

### (Item 2)

The assistance method according to item 1, comprising outputting precipitation information of a solute from the concentrated solution, which is predicted based on the feed solution information and the membrane information.

### (Item 3)

The assistance method according to item 2, wherein the concentrating module is a first concentrating module, and the first concentrating module is a forward osmosis membrane module.

### (Item 4)

The assistance method according to item 2, wherein the concentrating module is a second concentrating module, and the second concentrating module is a membrane distillation membrane module.

### (Item 5)

The assistance method according to item 2, wherein:
the concentrating module includes a first concentrating module and a second concentrating module, the first concentrating module is a forward osmosis membrane module, and the second concentrating module is a membrane distillation membrane module; and
the concentrating apparatus performs a process of the first concentrating module and a process of the second concentrating module in parallel.

### (Item 6)

The assistance method according to item 5, wherein the precipitation information indicates whether a precipitation amount of the solute is an allowable range.

### (Item 7)

The assistance method according to item 6, wherein the predicted concentrated solution information further includes at least any of a predicted concentration ratio or predicted concentration time of the concentrated solution.

### (Item 8)

The assistance method according to any one of item 5 to 7, further comprising altering an operating condition of the concentrating apparatus based on the predicted concentrated solution information.

### (Item 9)

The assistance method according to item 8, wherein the operating condition includes at least any of a flow rate, temperature or pressure of the feed solution, a flow rate, temperature, concentration or pressure of a draw solution supplied to the first concentrating module, or a flow rate, temperature, concentration or pressure of cooling water supplied to the second concentrating module.

### (Item 10)

An assistance method according to item 8, further comprising:
acquiring composition information indicating a composition range which is a possible range of the composition of the concentrated solution, an allowable composition range which is a range that allows operation of the concentrating apparatus in the composition range, and a non-allowable composition range which is a range that can not allow operation of the concentrating apparatus in the composition range; and
altering, further based on the composition information, the operating condition of the concentrating apparatus.

### (Item 11)

The assistance method according to item 10, wherein the non-allowable composition range includes a range of the composition that can not allow operation of the concentrating apparatus due to the concentrating apparatus.

### (Item 12)

The assistance method according to item 11, further comprising updating the composition information when the solute in the concentrated solution has been detected to precipitate.

### (Item 13)

The assistance method according to item 10, wherein the composition information is a phase diagram showing a ratio of the solute, the first solvent and the second solvent in the concentrated solution.

### (Item 14)

The assistance method according to item 6, further comprising:
acquiring processing status information indicating a processing status of the first concentrating module and the second concentrating module during operation of the concentrating apparatus; and
updating the predicted concentrated solution information based on the processing status information.

### (Item 15)

The assistance method according to item 8, further comprising:
acquiring processing status information indicating a processing status of the first concentrating module and the second concentrating module during operation of the concentrating apparatus; and
updating the predicted concentrated solution information based on the processing status information.

### (Item 16)

A program which, when the program is executed by a computer, causes the computer to perform the assistance method according to item 1 or 2.

### EXPLANATION OF REFERENCES

10: input unit; 20: computation unit; 30: display unit; 40: storage unit; 100: assistance apparatus; 110: feed solution; 120: draw solution; 130: cooling water; 200: concentrating apparatus; 210: feed solution tank; 215: feed solution pump; 220: first concentrating module; 222: first concentrating membrane; 230: draw solution tank; 235: draw solution pump; 240: second concentrating module; 242: second concentrating membrane; 245: feed solution pump; 250: cooling water tank; 255: cooling water pump; 1000: manufacturing apparatus; 1010: input/output unit; 1012: input unit; 1014: acquiring unit ; 1020: computation unit; 1022: mass transfer coefficient calculation unit; 1024: driving force calculation unit; 1026: predicting unit; 1028: precipitation determination unit; 1040: storage unit; 1100: assistance apparatus; 3010: input/output unit; 3020: computation unit; 3030: display unit; 3032: composition information; 3033: precipitation line; 3034: target concentrated solution composition; 3035: predicted concentrated solution composition; 3036: list of operation altering means; 3040: storage unit; 3100: assistance apparatus; 2200: computer; 2201: ROM; 2210: host controller; 2212: CPU; 2214: RAM; 2216: graphics controller; 2218: display device; 2220: output controller; 2222: communication interface; 2224: hard disk drive; 2226: ROM drive; 2230: ROM; 2240: output chip; 2242: keyboard.

## Claims

1. A manufacturing method for manufacturing a concentrated solution by concentrating a predetermined feed solution using a concentrating apparatus, wherein:
the feed solution includes at least a solute, a first solvent and a second solvent;
the concentrating apparatus has a concentrating module which concentrates the feed solution via a concentrating membrane;
the manufacturing method comprises:
inputting target concentrated solution information including target composition of the concentrated solution;
acquiring current concentrated solution information including current composition of the concentrated solution;
acquiring previous concentrated solution information including previous composition of the concentrated solution;
calculating, based on the current concentrated solution information and the previous concentrated solution information, a mass transfer coefficient of the concentrating membrane;
calculating, based on the current concentrated solution information and the previous concentrated solution information, a driving force for the concentrated solution to pass through the concentrating membrane; and
calculating, based on the driving force and the mass transfer coefficient, predicted concentrated solution information including a composition of the concentrated solution after elapse of a certain period of time.

2. The manufacturing method according to claim 1, wherein the concentrating module includes a first concentrating module with a first concentrating membrane, and a second concentrating module with a second concentrating membrane.

3. The manufacturing method according to claim 2, wherein:
the mass transfer coefficient includes a first mass transfer coefficient of the first concentrating membrane and a second mass transfer coefficient of the second concentrating membrane;
the driving force includes a first driving force for the first solvent or the second solvent to pass through the first concentrating membrane and a second driving force for the first solvent or the second solvent to pass through the second concentrating membrane; and
the calculating the predicted concentrated solution information includes:
calculating, based on the first driving force and the first mass transfer coefficient, a first membrane permeation amount passing through the first concentrating membrane in the certain period of time; and
calculating, based on the second driving force and the second mass transfer coefficient, a second membrane permeation amount passing through the second concentrating membrane in the certain period of time.

4. The manufacturing method according to claim 2 or 3, comprising determining presence or absence of precipitation of the solute based on the predicted concentrated solution information, composition information indicating a possible ratio of the solute, the first solvent and the second solvent in the concentrated solution, precipitation range information of the solute, and the target concentrated solution information.

5. The manufacturing method according to claim 4, comprising:
acquiring an operation altering means when the solute is determined to precipitate, and updating the predicted concentrated solution information based on the driving force calculated based on the operation altering means and the mass transfer coefficient; and
determining presence or absence of precipitation of the solute based on the predicted concentrated solution information that is updated, the composition information, the precipitation range information, and the target concentrated solution information.

6. The manufacturing method according to claim 5, comprising outputting, when the solute is determined not to precipitate, the operation altering means to the concentrating apparatus.

7. The manufacturing method according to claim 5 or 6, wherein the first concentrating module is a forward osmosis membrane module, and the second concentrating module is a membrane distillation membrane module.

8. The manufacturing method according to claim 7, wherein the operation altering means is a means which alters at least any of a flow rate, temperature or pressure of the concentrated solution, a flow rate, temperature, concentration or pressure of a draw solution supplied to the first concentrating module, or a flow rate, temperature, concentration or pressure of cooling water supplied to the second concentrating module.

9. A program which, when the program is executed by a computer, causes the computer to perform the manufacturing method according to any one of claims 1 to 8.

10. A manufacturing apparatus which manufactures a concentrated solution by concentrating a predetermined feed solution using a concentrating apparatus, wherein:
the feed solution at least includes a solute, a first solvent and a second solvent;
the concentrating apparatus has a concentrating module which concentrates the feed solution via a concentrating membrane;
the manufacturing apparatus comprises:
an input unit which inputs target concentrated solution information including target composition of the concentrated solution;
an acquiring unit which acquires current concentrated solution information including current composition of the concentrated solution, and previous concentrated solution information including previous composition of the concentrated solution;
a mass transfer coefficient calculation unit which calculates, based on the current concentrated solution information and the previous concentrated solution information, a mass transfer coefficient of the concentrating membrane;
a driving force calculation unit which calculates, based on the current concentrated solution information and the previous concentrated solution information, a driving force for the concentrated solution to pass through the concentrating membrane; and
a predicting unit which calculates, based on the driving force and the mass transfer coefficient, predicted concentrated solution information including composition of the concentrated solution after elapse of a certain period of time.

11. An assistance method of a concentrating apparatus for producing a concentrated solution concentrated from a predetermined feed solution, wherein:
the feed solution at least includes a solute, a first solvent and a second solvent;
the concentrating apparatus includes a concentrating module which concentrates the feed solution via a concentrating membrane;
the assistance method comprises:
inputting target concentrated solution information including target composition of the concentrated solution;
acquiring current concentrated solution information including current composition of the concentrated solution;
acquiring previous concentrated solution information including previous composition of the concentrated solution;
calculating, based on the current concentrated solution information and the previous concentrated solution information, a mass transfer coefficient of the concentrating membrane;
calculating, based on the current concentrated solution information and the previous concentrated solution information, a driving force for the concentrated solution to pass through the concentrating membrane; and
calculating, based on the driving force and the mass transfer coefficient, predicted concentrated solution information including a composition of the concentrated solution after elapse of a certain period of time.

12. The assistance method according to claim 11, wherein the concentrating module includes a first concentrating module with a first concentrating membrane, and a second concentrating module with a second concentrating membrane.

13. The assistance method according to claim 12, wherein:
the mass transfer coefficient includes a first mass transfer coefficient of the first concentrating membrane and a second mass transfer coefficient of the second concentrating membrane;
the driving force includes a first driving force for the concentrated solution to pass through the first concentrating membrane and a second driving force for the concentrated solution to pass through the second concentrating membrane; and
the calculating the predicted concentrated solution information includes:
calculating, based on the driving force and the mass transfer coefficient, a membrane permeation amount passing through the first concentrating membrane and the second concentrating membrane in the certain period of time.

14. The assistance method according to claim 12 or 13, comprising displaying the predicted concentrated solution information.

15. The assistance method according to any one of claims 12 to 14, comprising displaying precipitation range information of the solute in association with composition information visually indicating a possible ratio of the solute, the first solvent and the second solvent in the concentrated solution.

16. The assistance method according to claim 15, comprising:
displaying, in association with the composition information, the predicted concentrated solution information and the target concentrated solution information;
determining, presence or absence of precipitation of the solute based on the predicted concentrated solution information, the precipitation range information, and the target concentrated solution information which are displayed in association with the composition information, and displaying a determination result.

17. The assistance method according to claim 16, comprising:
deciding, when the solute is determined to precipitate, based on the precipitation range information and the target concentrated solution information displayed in association with the composition information, candidate concentrated solution information including a composition candidate after elapse of the certain period of time of the concentrated solution; and
displaying, in association with the composition information, operation altering presentation information indicating transition from the predicted concentrated solution information to the candidate concentrated solution information.

18. The assistance method according to claim 17, comprising:
acquiring an operation altering means when the solute is determined to precipitate, and calculating, based on the driving force and the mass transfer coefficient calculated based on the operation altering means, candidate concentrated solution information including the composition candidate after elapse of the certain period of time of the concentrated solution;
displaying, in association with the composition information, recommended operation altering information indicating transition from the predicted concentrated solution information to the candidate concentrated solution information.

19. The assistance method according to claim 18, wherein the first concentrating module is a forward osmosis membrane module, and the second concentrating module is a membrane distillation membrane module.

20. The assistance method according to claim 19, wherein the operation altering means is a means which alters at least any of a flow rate, temperature or pressure of the concentrated solution, a flow rate, temperature, concentration or pressure of a draw solution supplied to the first concentrating module, or a flow rate, temperature, concentration or pressure of cooling water supplied to the second concentrating module.

21. A program which, when the program is executed by a computer, causes the computer to perform the assistance method according to any one of claims 11 to 20.

22. An assistance apparatus of a concentrating apparatus for producing a concentrated solution concentrated from a predetermined feed solution, wherein:
the feed solution at least includes a solute, a first solvent and a second solvent;
the concentrating apparatus has a concentrating module which concentrates the feed solution via a concentrating membrane;
the assistance apparatus comprises:
an input unit which inputs target concentrated solution information including target composition of the concentrated solution;
an acquiring unit which acquires current concentrated solution information including current composition of the concentrated solution, and previous concentrated solution information including previous composition of the concentrated solution;
a mass transfer coefficient calculation unit which calculates, based on the current concentrated solution information and the previous concentrated solution information, a mass transfer coefficient of the concentrating membrane;
a driving force calculation unit which calculates, based on the current concentrated solution information and the previous concentrated solution information, a driving force for the concentrated solution to pass through the concentrating membrane; and
a predicting unit which calculates, based on the driving force and the mass transfer coefficient, predicted concentrated solution information including composition of the concentrated solution after elapse of a certain period of time.
